# EUROPÄISCHE PATENTSCHRIFT

(11) **EP 2 466 105 B1**
(45) Veröffentlichungstag und Bekanntmachung des Hinweises auf die Patenterteilung: **23.09.2015**
(21) Anmeldenummer: 11192604.4
(22) Anmeldetag: 08.12.2011
(51) Int. Cl.: F02M 37/10, B60K 15/03, G01F 23/36, H01R 24/68

(54) **Vorrichtung zum Erstellen einer elektrischen Verbindung**
Device for making an electrical connection
Dispositif d'établissement d'une connexion électrique

(30) Priorität: 15.12.2010 DE 102010054604
(43) Veröffentlichungstag der Anmeldung: 20.06.2012
(73) Patentinhaber: Continental Automotive GmbH, 30165 Hannover (DE)
(72) Erfinder: Schönert, Oliver, 59757 Arnsberg (DE)

(56) Entgegenhaltungen:
- WO-A2-2006/027355
- DE-A1- 10 324 779
- DE-A1- 19 933 044
- DE-C2- 3 310 704
- JP-A- 2009 058 376
- US-A- 3 366 776
- US-A- 5 852 545

## Beschreibung

Gegenstand der Erfindung ist eine Vorrichtung zum Erstellen einer elektrischen Verbindung, bestehend aus einer elektrischen Komponente, einem Halteteil für die elektrische Komponente, elektrischen Anschlussleitungen für die elektrische Komponente, sowie einer aus zwei miteinander verbindbaren Teilen bestehenden Steckverbindung für die elektrischen Anschlussleitungen.

Derartige Vorrichtungen finden Verwendung zum Verbinden elektrischer Komponenten, insbesondere von Kraftstoffpumpen oder Füllstandgebern in Kraftstoffbehältern von Kraftfahrzeugen. Die elektrischen Anschlussleitungen dienen beispielsweise bei einer Kraftstoffpumpe zur Stromversorgung oder bei einem Füllstandgeber, um die in Abhängigkeit vom Füllstand gewonnenen elektrischen Signale einer Auswerteelektronik zuzuführen. Sowohl Füllstandsgeber als auch Kraftstoffpumpe weisen mit Stecker oder Buchse jeweils einen Teil der Steckverbindung auf. Durch ein Verbinden mit dem jeweils anderen Teil der Steckverbindung lassen sich die Kraftstoffpumpe und der Füllstandsgeber mit einer Stromversorgung oder anderen elektrischen Baugruppen verbinden. Nachteilig hierbei ist, dass das Erstellen der elektrischen Verbindungen nach erfolgter Montage der elektrischen Komponente im Kraftstoffbehälter erfolgt. Da die elektrischen Komponenten oftmals durch eine Flanschöffnung in den Kraftstoffbehälter eingebracht teilweise bis in schwer von Hand zugänglichen Bereichen montiert werden, muss das Erstellen der elektrischen Verbindung zwangsläufig ebenfalls in diesen Bereichen erfolgen. Aufgrund der geringen Platzverhältnisse im Kraftstoffbehälter ist dabei oftmals nur eine Ein-Hand-Montage und oder eine Montage ohne Blickkontakt möglich. Zusätzlich werden durch die fehlende Sicht Fehler während der Montage begünstigt, indem Anschlussleitungen vertauscht oder nicht bis zur vollständigen Kontaktierung montiert werden. Die Folge davon ist ein Ausfall der elektrischen Komponente oder das fehlerhafte Funktionieren der elektrischen Komponente, was zeit- und kostenaufwändige Reparaturen erfordert.

Dazu ist es bekannt, die elektrischen Anschlussleitungen mit Überlänge vorzusehen, um die Steckverbindung außerhalb des Kraftstoffbehälters zu fügen. Anschließend wurde die Steckverbindung mit den Anschlussleitungen im Kraftstoffbehälter verlegt. Aufgrund der Fahrzeugbewegungen konnte sich die Steckverbindung bewegen, was zu Kontaktunterbrechungen infolge von Reibkorrosion führen kann. Zudem können die überlangen Anschlussleitungen in den Bereich bewegter Teile, z. B. des Hebelarms des Füllstandsgebers, gelangen und dort ein Klemmen bewirken, was ebenfalls zu Fehlfunktionen führen kann. Ein Fixieren der überlangen Anschlussleitungen erfordert dagegen zusätzliche Befestigungsmittel, damit verbunden Montageaufwand und entsprechend vorhandene Verlegewege. Zudem bedingen die Befestigungsmittel und die längeren Anschlussleitungen höhere Kosten.

Darüber hinaus sind aus der JP2009058376 im Halteteil integrierte Kontakte bekannt geworden.

Der Erfindung liegt daher die Aufgabe zugrunde, eine eingangs genannte Vorrichtung zu schaffen, welche ein einfaches und zuverlässiges Erstellen einer elektrischen Verbindung hat. Das Erstellen der elektrischen Verbindung sollte mit einer Hand, ohne Blickkontakt bei geringen Kosten möglich sein.

Erfindungsgemäß wird die Aufgabe durch die kennzeichnenden Merkmale des Anspruchs 1 gelöst. Dabei ist das erste Teil der Steckverbindung an der elektrischen Komponente und das zweite Teil der Steckverbindung an dem Halteteil angeordnet, wobei das erste und das zweite Teil derart angeordnet sind, dass beim Verbinden der elektrischen Komponente mit dem Halteteil das erste mit dem zweiten Teil verbunden wird.

Mit der erfindungsgemäßen Vorrichtung wird die Steckverbindung gleichzeitig mit der Montage der elektrischen Komponente mit dem Halteteil geschlossen. Dadurch entfällt ein separates Verbinden der beiden Teile der Steckverbindung. Mit dem Wegfall dieses Montageschrittes gestaltet sich die Montage einfacher. Hinzu kommt, dass das Halteteil und die elektrische Komponente größer als eine Steckverbindung sind, so dass Montagehilfen wie Einführschrägen ebenfalls größer ausgeführt sein können, was die Handhabung wesentlich problemloser gestaltet. Überdies werden Fehlfunktionen infolge unvollständiger Kontaktierung oder Vertauschen der Anschlussleitungen ausgeschlossen. Weiter können längere Anschlussleitungen für eine Kontaktierung außerhalb des Kraftstoffbehälters und Befestigungsmittel für diese Anschlussleitungen eingespart werden.

In einer vorteilhaften Ausgestaltung sind die beiden Teile der Steckverbindung als Stecker und Buchse ausgebildet.

Sofern die elektrische Komponente aus mehreren Teilkomponenten besteht, ist das erste Teil an einer der Teilkomponenten angeordnet. Die Anordnung der Teilkomponente im Kraftstoffbehälter, deren Erreichbarkeit für die Montage und deren Größen können Kriterien für die Auswahl einer geeigneten Teilkomponente sein. So hat es sich als vorteilhaft herausgestellt, bei einem Füllstandsgeber das erste Teil der Steckverbindung am Träger für das Widerstandsnetzwerk des Füllstandsgebers anzuordnen.

Ein zuverlässiger Schutz gegen ein ungewolltes Lösen der Steckverbindung, z. B. infolge von Fahrzeugbewegungen, wird vermieden, wenn die Steckverbindung verriegelbar ist, wobei die Mechanik zum Ver- und Entriegeln an dem Halteteil oder einer der Teilkomponenten angeordnet ist.

Eine vereinfachte Demontage wird erreicht, wenn die Steckverbindung über eine Zwangsentriegelung verfügt, wobei die Zwangsentriegelung durch das Entriegeln des Halteteils ausgelöst wird.

Ein besonders hoher Integrationsgrad wird erreicht, wenn die Teile der Steckverbindung jeweils integral, d.h. einteilig, an der elektrischen Komponente und dem Halteteil ausgebildet sind. Dagegen erlaubt die erfindungsgemäße lösbare Anordnung des ersten und zweiten Teils der Steckverbindung an der elektrischen Komponente und dem Halteteil die Verwendung von standardisierten Steckern und Buchsen.

Die lösbar angeordneten Teile der Steckverbindung lassen sich besonders einfach und kostengünstig montieren, wenn sie jeweils mittels einer Rastverbindung an der elektrischen Komponente und dem Halteteil angeordnet sind.

Zur Montage des Halteteils mit der elektrischen Komponente und damit der Steckverbindung kommt überwiegend eine geradlinige Steckbewegung zur Anwendung. Sofern die Teile der Steckverbindung leicht beweglich angeordnet sind oder entsprechend große Einführschrägen aufweisen, erlaubt die erfindungsgemäße Vorrichtung darüber hinaus eine Montage von elektrischer Komponente und Halteteil mittels einer Schwenkbewegung.

An zwei Ausführungsbeispielen ist die Erfindung näher erläutert. Dabei zeigt die Zeichnung in
- Figur 1: einen Füllstandgeber in einem Kraftstoffbehälter,
- Figur 2: ein Halteteil mit einem ersten Teil einer Steckverbindung,
- Figur 3: einen Träger mit einem zweiten Teil einer Steckverbindung und
- Figur 4: die erfindungsgemäße Vorrichtung im Vollschnitt,
- Figur 5: die Vorrichtung nach Figur 4 in einem Schnitt und
- Figur 6: eine weitere Ausführungsform der Vorrichtung.

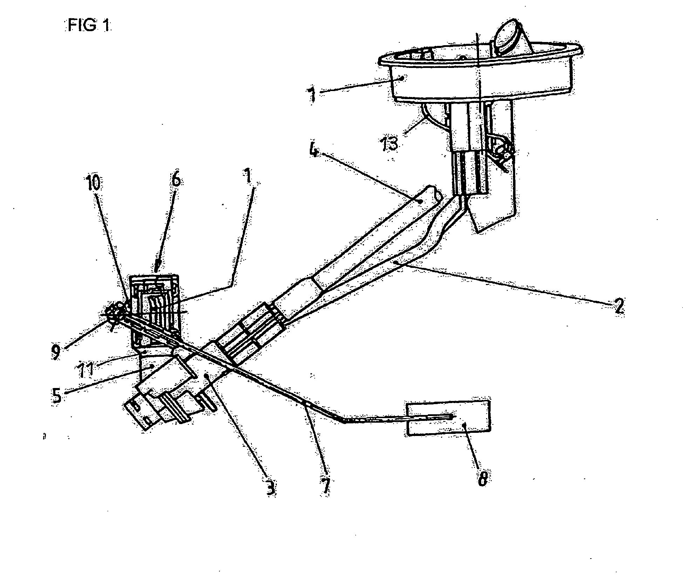

Figur 1 zeigt einen als Deckel ausgebildeten Flansch 1, welcher eine Öffnung einer oberen Wand eines nicht dargestellten Kraftstoffbehälters verschließt. Von diesem Flansch 1 führt ein Niederhalter 2 schräg nach unten, welcher an seinem freien Ende eine Saugstrahlpumpe 3 trägt. Von dieser Saugstrahlpumpe 3 führt eine Kraftstoffleitung 4 in eine nicht dargestellte Tankkammer, in welcher eine elektrische Kraftstoffpumpe zum Fördern von Kraftstoff zu einer Einspritzanlage angeordnet ist. Am Gehäuse der Saugstrahlpumpe 3 ist ein Halteteil 5 angeordnet, an dem ein Füllstandgeber 6 als eine elektrische Komponente für diese Tankkammer sitzt. Der Füllstandgeber 6 hat einen Hebelarm 7 mit einem Schwimmer 8 am freien Ende. Der Hebelarm 7 ist mit einer Achse 9 in einer Buchse 10 gelagert, welche am Träger 11 des Füllstandgebers 6 angeformt ist. Der Füllstandgeber 6 weist ein Substrat 12 auf, auf dem ein Widerstandsnetzwerk in Dickschichttechnologie mit einer Potentiometerbahn angeordnet ist. Auf der Potentiometerbahn bewegt sich ein Schleifkontakt in Abhängigkeit von der Schwenkbewegung des Hebelarms 7. Um die elektrischen Signale des Füllstandgebers 6 zu einer nicht dargestellten Auswerteelektronik übertragen zu können, ist das Substrat mit elektrischen Anschlüssen verbunden, die wiederum mit elektrischen Signalleitungen 13 verbunden sind, die vom Halteteil 5, durch den Flansch 1 zu der Auswerteelektronik führen. Die Verbindung der elektrischen Anschlüsse mit den elektrischen Signalleitungen 13 ist in den nachfolgenden Figuren beschrieben.

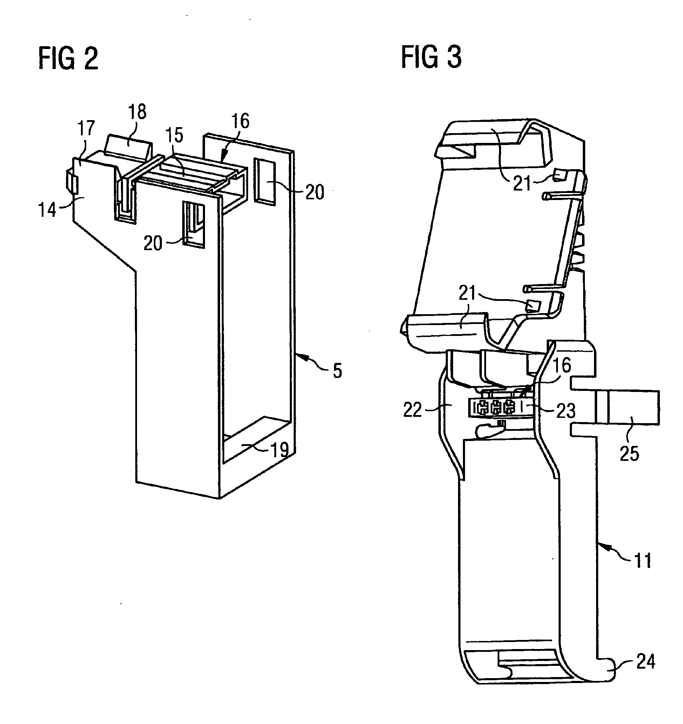

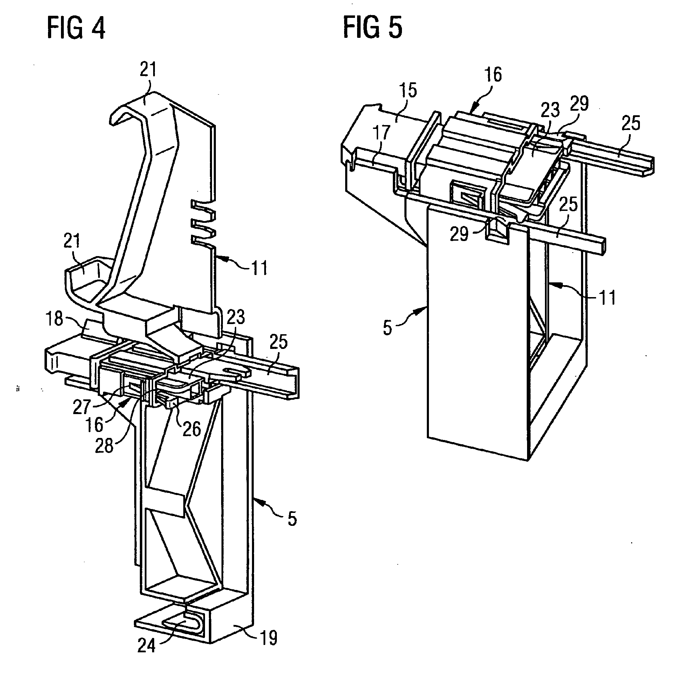

Das Halteteil 5 in Figur 2 kann gemäß Figur 1 an dem Gehäuse einer Saugstrahlpumpe angeformt sein. Es ist aber auch denkbar, dass das Halteteil 5 Bestandteil anderer Komponenten ist, z. B. an einem Schwalltopf einer Fördereinheit oder aber an einem Flansch. Das Halteteil 5 besitzt eine Aufnahme 14 für ein erstes Teil 15 der Steckverbindung 16. Die Aufnahme 14 ist U-förmig ausgebildet, wobei die freien Schenkel 17, 18 als Rasthaken ausgebildet sind, in die das erste Teil 15 der Steckverbindung 16 eingeklipst wird, so dass es in vertikaler Richtung festliegt. Die Schenkel 17, 18 ihrerseits greifen in Ausnehmungen des ersten Teils 15 ein, wodurch das erste Teil 15 der Steckverbindung 16 in horizontaler Richtung zum Halteteil 5 festgelegt wird. Das Halteteil 5 besitzt weiter einen Anschlag 19 und Raststufen 20, deren Wirkungsweise in Figur 4 erläutert wird. Zur besseren Übersichtlichkeit sind die Signalleitungen 13, welche das erste Teil 15 der Steckverbindung 16 im Bereich der Schenkel 17, 18 verlassen, nicht dargestellt.

Der Träger 11 in Figur 3 besitzt im oberen Teil Rastelemente 21 zur Aufnahme des nicht dargestellten Substrats des Füllstandsgebers. In einer Aufnahme 22 ist das zweite Teil 23 der Steckverbindung 16 ortsfest angeordnet. Im unteren Bereich der dargestellten Ausrichtung besitzt der Träger 11 einen Rasthaken 24, dessen Funktion in Verbindung mit den Rastarmen 25 in den folgenden Figuren beschrieben wird.

Figur 4 zeigt die erfindungsgemäße Vorrichtung mit Träger 11 und Halteteil 5 im montierten Zustand. Während der Montage wird der Träger 11 in einer gegenüber der Darstellung leicht im Uhrzeigersinn gedrehten Position mit dem Rasthaken 24 in den Anschlag 19 des Halteteils 5 eingesetzt. Anschließend wird der Träger entgegen dem Uhrzeigersinn verschwenkt, wobei der Anschlag 19 den Drehpunkt der Schwenkbewegung bildet. Während der Schwenkbewegung gelangt das als Stecker ausgebildete zweite Teil 23 der Steckverbindung 16 in das als Buchse ausgebildete erste Teil 15 der Steckverbindung 16. Die Schwenkbewegung entgegen dem Uhrzeigersinn wird begrenzt, wenn die Rastarme 25 des Trägers 11 mit ihren Rasthaken in die Raststufen 20 des Halteteils 5 eingreifen. Genau in dieser Position verrasten die Rastarme 26 mit ihren Rasthaken 27 des zweiten Teils 23 der Steckverbindung 16 mit den Raststufen 28 des ersten Teils 15 der Steckverbindung 16. Auf diese Weise wird allein mit der Bewegung des Trägers 11 sowohl die Montage des Trägers am Halteteil als auch die elektrische Kontaktierung bewirkt. Eine zusätzliche Handhabung zur Kontaktierung elektrischer Leitungen ist nicht erforderlich, was eine ein-Hand-Montage auch ohne Sichtkontakt ermöglicht.

Die Vorrichtung in Figur 5 zeigt einen Schnitt durch das Halteteil 5 und den Träger 11 senkrecht zum Schnitt gemäß Figur 4. Die erfindungsgemäße Vorrichtung erlaubt auch die Ein-Hand-Demontage. Hierzu werden die Rastarme 25 des Trägers 11 an ihren freien Enden zusammengedrückt, wodurch sich die Rasthaken 29 aus den Raststufen 20 lösen. Mit dem Zusammendrücken der Rastarme 25 werden gleichzeitig die Rastarme 26 des zweiten Teils 23 der Steckverbindung 16 zusammengedrückt, so dass sich die Rasthaken 27 aus den Raststufen 28 lösen. Weder Trägerteil 11 noch das zweite Teil 23 der Steckverbindung 16 ist verriegelt, so dass ein Verschwenken des Trägers 11 im Uhrzeigersinn um den als Drehpunkt wirkenden Anschlag 19 die Demontage von Träger 11 und Halteteil 5 als auch das Lösen der elektrischen Verbindung bewirkt.

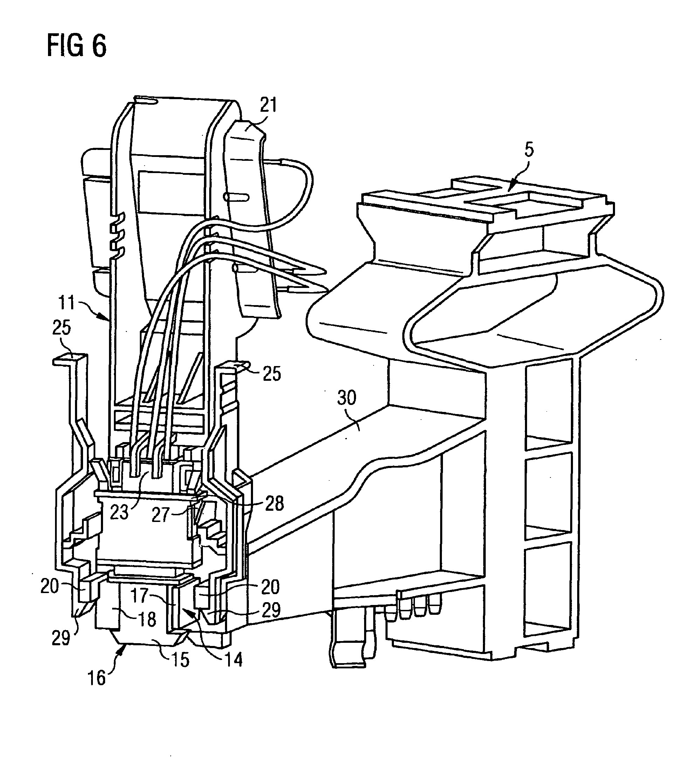

Die Vorrichtung gemäß den vorhergehenden Figuren ist derart ausgebildet, dass das Verbinden des Halteteils mit dem Träger mittels einer Schwenkbewegung erfolgt. Im Gegensatz dazu zeigt Figur 6 die Vorrichtung in einer Ausgestaltung, bei der das Verbinden des Trägers 11 mit dem Halteteil 5 durch eine geradlinige Bewegung von oben nach unten erfolgt. Die Steckverbindung 16 und der Träger 11 besitzen den gleichen Aufbau. Das Halteteil 5 besitzt einen seitlich abstehenden Arm 30, der eine Aufnahme 14 für ein erstes Teil 15 der Steckverbindung 16. Die Aufnahme 14 ist U-förmig ausgebildet, wobei die freien Schenkel 17, 18 als Rasthaken ausgebildet sind, in die das erste Teil 15 der Steckverbindung 16 eingeklipst wird. Weiter sind am Arm 30 als Raststufen 20 wirkende Formelemente ausgebildet, die mit den Rasthaken 29 des Trägerteils 11 verrasten.

## Patentansprüche

1. Vorrichtung zum Erstellen einer elektrischen Verbindung in einem Kraftstoffbehälter eines Kraftfahrzeuges, bestehend aus einer elektrischen Komponente, einem im Kraftstoffbehälter angeordneten Halteteil für die elektrische Komponente, elektrischen Anschlussleitungen für die elektrische Komponente, sowie einer aus zwei miteinander verbindbaren Teilen bestehenden Steckverbindung für die elektrischen Anschlussleitungen, wobei das erste Teil (15) der Steckverbindung (16) an dem Halteteil (5) und das zweite Teil (23) der Steckverbindung (16) an der elektrischen Komponente (6, 11) angeordnet ist, **dadurch gekennzeichnet, dass** das erste und das zweite Teil (15, 23) derart angeordnet sind, dass beim Verbinden der elektrischen Komponente (6, 11) mit dem Halteteil (5) das erste mit dem zweiten Teil (15, 23) verbunden wird, so dass die Steckverbindung gleichzeitig mit der Montage der elektrischen Komponente an dem Halteteil geschlossen wird, wobei das erste und zweite Teil (15, 23) der Steckverbindung (16) jeweils lösbar an der elektrischen Komponente (6, 11) und dem Halteteil (5) angeordnet sind.

2. Vorrichtung nach Anspruch 1, **dadurch gekennzeichnet, dass** die beiden Teile (15, 23) der Steckverbindung (16) als Stecker und Buchse ausgebildet sind.

3. Vorrichtung nach Anspruch 1 und 2, **dadurch gekennzeichnet, dass** die elektrische Komponente (6) aus mehreren Teilkomponenten besteht und das erste Teil (15) an einer der Teilkomponenten (11) angeordnet ist.

4. Vorrichtung nach zumindest einem der vorhergehenden Ansprüche, **dadurch gekennzeichnet, dass** die Steckverbindung (16) verriegelbar ist, wobei die Mechanik zum Ver- und Entriegeln an dem Halteteil (5) oder einer der Teilkomponenten (11) angeordnet ist.

5. Vorrichtung nach einem der vorhergehenden Ansprüche, **dadurch gekennzeichnet, dass** das erste und das zweite Teil (15, 23) der Steckverbindung (16) jeweils mittels einer Rastverbindung (14, 17, 18) an der elektrischen Komponente (11) und dem Halteteil (5) angeordnet sind.

6. Vorrichtung nach zumindest einem der vorhergehenden Ansprüche, **dadurch gekennzeichnet, dass** die beiden Teile (15, 23) der Steckverbindung (16) miteinander verbunden werden, indem die elektrischen Komponenten (6, 11) mit dem Halteteil (5) mittels einer geradlinigen Steckbewegung oder einer Schwenkbewegung montiert werden.

## Claims

1. Apparatus for creating an electrical connection in a fuel container of a motor vehicle, comprising an electrical component, a retaining part, which is arranged in the fuel container, for the electrical component, electrical connection lines for the electrical component, and also a plug connection, which comprises two parts which can be connected to one another, for the electrical connection lines, wherein the first part (15) of the plug connection (16) is arranged on the retaining part (5), and the second part (23) of the plug connection (16) is arranged on the electrical component (6, 11), **characterized in that** the first and the second part (15, 23) are arranged in such a way that, when the electrical component (6, 11) is connected to the retaining part (5), the first part (15) is connected to the second part (23), so that the plug connection is closed at the same time as the electrical component is mounted on the retaining part, wherein the first and second parts (15, 23) of the plug connection (16) are respectively arranged in a detachable manner on the electrical component (6, 11) and the retaining part (5).

2. Apparatus according to Claim 1, **characterized in that** the two parts (15, 23) of the plug connection (16) are in the form of a plug and a socket.

3. Apparatus according to Claims 1 and 2, **characterized in that** the electrical component (6) comprises a plurality of subcomponents, and the first part (15) is arranged on one of the subcomponents (11).

4. Apparatus according to at least one of the preceding claims, **characterized in that** the plug connection (16) can be locked, wherein the locking and unlocking mechanism is arranged on the retaining part (5) or one of the subcomponents (11).

5. Apparatus according to one of the preceding claims, **characterized in that** the first and second parts (15, 23) of the plug connection (16) are respectively arranged on the electrical component (11) and the retaining part (5) by means of a latching connection (14, 17, 18).

6. Apparatus according to at least one of the preceding claims, **characterized in that** the two parts (15, 23) of the plug connection (16) are connected to one another by the electrical components (6, 11) being fitted to the retaining part (5) by means of a rectilinear plugging movement or a pivoting movement.

## Revendications

1. Dispositif d'établissement d'une liaison électrique dans un réservoir à carburant d'un véhicule automobile, constitué d'un composant électrique, d'une partie de maintien du composant électrique disposée dans le réservoir à carburant, de lignes de connexion électriques pour le composant électrique, ainsi que d'une liaison par enfichage pour les lignes de connexion électriques, composée de deux parties pouvant être reliées l'une à l'autre, dans lequel la première partie (15) de la liaison (16) par enfichage est mise sur la partie (5) de maintien et la deuxième partie (23) de la liaison (16) par enfichage est mise sur le composant (6, 11) électrique, **caractérisé en ce que** la première et la deuxième parties (15, 23) sont mises de manière à ce que, lors de la liaison du composant (6, 11) électrique à la partie (5) de maintien, la première partie soit reliée à la deuxième partie (15, 23) de manière à ce que la liaison par enfichage soit fermée en même temps que le montage du composant électrique sur la pièce de maintien, la première et la deuxième parties (15, 23) de la liaison (16) par enfichage étant mises en étant respectivement amovible sur le composant (6, 11) électrique et sur la partie (5) de maintien.

2. Dispositif suivant la revendication 1, en ce que les deux parties (15, 23) de la liaison (16) par enfichage sont constituées sous la forme d'une pièce mâle et d'une pièce femelle.

3. Dispositif suivant la revendication 1 ou 2, **caractérisé en ce que** le composant (6) électrique est composé de plusieurs sous-composants et la première partie (15) est mise sur l'un des sous-composants (11).

4. Dispositif suivant au moins l'une des revendications précédentes, **caractérisé en ce que** la liaison (16) par enfichage est verrouillable, le mécanisme de verrouillage et de déverrouillage étant mis sur la partie (5) de maintien ou sur l'un des sous-composants (11).

5. Dispositif suivant l'une des revendications précédentes, **caractérisé en ce que** la première et la deuxième parties (15, 23) de la liaison (16) par enfichage sont mises sur le composant (11) électrique et sur la pièce (5) de maintien respectivement au moyen d'une liaison (14, 17, 18) par encliquetage.

6. Dispositif suivant l'une des revendications précédentes, **caractérisé en ce que** les deux parties (15, 23) de la liaison (16) par enfichage sont reliées l'une à l'autre par le fait que le composant (6, 11) électrique est monté avec la partie (5) de maintien au moyen d'un mouvement d'enfichage linéaire ou d'un mouvement de pivotement.
